**Europäisches Patentamt**

**European Patent Office**

**Office européen des brevets**

(19)

(11) Veröffentlichungsnummer : **0 036 038 B1**

## EUROPÄISCHE PATENTSCHRIFT

(12)

(45) Veröffentlichungstag der Patentschrift :
21.03.84

(21) Anmeldenummer : **80107040.0**

(22) Anmeldetag : **14.11.80**

(51) Int. Cl.³ : **F 16 L 23/02**, F 16 L  3/00,
F 24 F  13/02

(54) **Verbindung für die Enden zweier Teilstücke eines eckigen Luftkanals.**

(30) Priorität : **14.03.80 CH 2003/80**

(43) Veröffentlichungstag der Anmeldung :
**23.09.81 Patentblatt 81/38**

(45) Bekanntmachung des Hinweises auf die Patenterteilung : **21.03.84 Patentblatt 84/12**

(84) Benannte Vertragsstaaten :
**AT BE DE FR GB IT NL**

(56) Entgegenhaltungen :
**CH-A-   363 776**
**DE-A- 1 525 688**
**DE-A- 1 750 133**
**DE-A- 2 407 526**
**DE-A- 2 750 110**
**FR-A- 2 292 180**
**GB-A-   781 144**
**US-A- 1 436 882**
**US-A- 2 264 666**
**US-A- 2 286 118**
**US-A- 3 872 894**

(73) Patentinhaber : **GEBRÜDER SULZER AKTIENGE-
SELLSCHAFT**
**Zürcherstrasse 9**
**CH-8401 Winterthur (CH)**

(72) Erfinder : **Wachter, Erich**
**Wehntalerstrasse 140**
**CH-8057 Zürich (CH)**

(74) Vertreter : **Dipl.-Ing. H. Marsch Dipl.-Ing. K. Sparing
Dipl.-Phys. Dr. W.H. Röhl Patentanwälte
Rethelstrasse 123
D-4000 Düsseldorf (DE)**

# Verbindung für die Enden zweier Teilstücke eines eckigen Luftkanals

Die Erfindung betrifft eine Verbindung für die Enden zweier Teilstücke eines eckigen Luftkanals für eine Lüftungsanlage, wobei entlang jeder Kanalseite die einander zugewandten Enden der Teilstücke mindestens nahezu senkrecht zu einem Flansch abgewinkelt und unter Zwischenlegen einer elastischen Dichtung zusammengepresst sind, und wobei die Flansche jedes Teilstücks in einen Profilrahmen mit in Umfangsrichtung geschlossenen, im Querschnitt L-förmigem Profil eingelassen und mit dem Profilrahmen fest verbunden sind.

Luftkanäle von Lüftungsanlagen sind im allgemeinen aus relativ dünnen Blechen gefertigt. Bei bekannten Verbindungen der genannten Art (DE-A-2.414.815 ; CH-A-606.930), bei denen die Verbindung allein aus den Flanschen besteht, die durch einfaches Umbiegen der dünnen Kanalwände hergestellt werden, haben sich Schwierigkeiten ergeben, da die abgebogenen Flansche besonders beim Transport und bei der Montage der Teilstücke leicht verbogen und beschädigt werden. Dabei sind besonders die durch das Abkanten der Kanalwände entstehenden freien Ecken gefährdet. Die Beschädigungen und Verbiegungen der Flansche führen sehr häufig zu Undichtheiten an den Stossstellen zweier Teilstücke.

Aus der FR-A-2.292.180 ist es daher bekannt, die abgebogene Flansche durch einen L-förmigen Profilrahmen zu verstärken ; bei dieser bekannten Konstruktion ist die Gefahr, dass besonders die Ecken und Kanten des Rahmens Beschädigungen erleiden, immer noch gross, obwohl die Wanddicke des Rahmens gegenüber derjenigen der Kanalwand beträchtlich verstärkt ist ; denn auch bei dieser Konstruktion ragt die Kante des Rahmens ungeschützt radial nach aussen. Beim Zusammenfügen von zwei Teilstücken bleibt darüberhinaus ein stufenförmiger Absatz, durch den die Abdichtung der Stossstelle zweier Teilstücke erschwert wird. Die Ecken werden bei dieser Konstruktion durch Biegen der Kanalwände bzw. des L-Profils des Rahmens gebildet, ein Herstellungsverfahren, das sehr aufwendig und daher für die Fabrikation von Lüftungskanälen nicht wirtschaftlich anwendbar ist. Die radiale Abmessung des Flansches bzw. des Querschenkels des Profilrahmens kann dabei eine gewisse Breite nicht übersteigen, weil die äusseren Bereiche des Querschenkels gestreckt und vor allem die inneren Bereiche gestaucht werden müssen ; die « Tiefe » einer zwischen den Querschenkeln liegenden Dichtung ist daher begrenzt.

Aus der DE-A 27 50 110 ist weiterhin bekannt, in einem Eckwinkelstück, mit dem die offenen Ecken zwischen den gegenüber der Kanalwand abgewinkelten Flanschen verschlossen werden, einen stufenförmigen Absatz vorzusehen, dessen Tiefe der Dicke der zu dem Flansch umgebogenen Kanalwand entspricht. Bei dieser Konstruktion sind sowohl die Fertigung und Montage der die Verbindung zwischen den Kanalteilstücken bildenden Profilrahmen als auch die Herstellung und das Einsetzen von separat gefertigten Eckwinkelstücken kompliziert und aufwendig.

Aus der DE-A 24 07 526 ist darüberhinaus an sich bekannt, die an die Enden zweier Teilstücke des Luftkanals angesetzten Profilrahmen durch auf sie aufgeschobene Klemmer — ähnlich wie bei der eingangs erwähnten CH-A 606 930 — miteinander zu verbinden.

In der US-A 2,286,118 ist eine Aufhängevorrichtung für einen Luftkanal gezeigt, die durch eine Klemmverbindung mit dem Luftkanal verbunden ist und eine in einer Lasche angeordnete Bohrung für den Durchtritt eines Tragbolzens aufweist.

Aufgabe der Erfindung ist es, eine Verbindung zweier Teilstücke eines Luftkanals zu schaffen, bei der der Profilrahmen bzw. die Flansche an den Enden der Teilstücke ohne besondere Vorsichtsmassnahmen den Belastungen beim Transport und der Montage gewachsen sind. Darüberhinaus soll der Fertigungsaufwand, die Herstellung und Montage der rahmenbestückten Enden der Teilstücke, insbesondere der Aufwand für das Füllen der beim Abwinkeln der Kanalwände entstehenden freien Ecken zwischen zwei Flanschen möglichst weitgehend verringert werden.

Gemäss der vorliegenden Erfindung wird diese Aufgabe dadurch gelöst, dass der quer zur Kanalachse verlaufende Querschenkel des L-Profils über die Höhe des Flansches einen stufenförmigen Absatz zur Aufnahme des Kanalflansches hat, dass ferner dieser stufenförmige Absatz derart ausgebildet ist, dass die elastische Dichtung in einer Ebene sowohl gegen den Flansch als auch gegen den aussen liegenden Bereich des Querschenkels anliegt, und dass schliesslich der in Richtung der Kanalachse angeordnete Längsschenkel des L-Profils am Aussenumfang des Profilrahmens angeordnet ist.

Der Rahmen ist beispielsweise aus einer Profilleiste so gefertigt, dass der Längsschenkel aussen liegt, wobei die Wandstärke der Leiste nur durch die Möglichkeiten der Verformungsmaschinen begrenzt ist. Der Rahmen kann daher allen Anforderungen beim Transport und der Montage der Teilstücke des Luftkanals unbeschadet widerstehen. Durch die Anordnung der Längsschenkel des L-Profils an der Aussenseite einerseits und durch die in Umfangsrichtung geschlossene Ausbildung des Rahmens andererseits werden weiterhin zum einen die besonders empfindlichen Ecken der Flansche geschützt und zum anderen wird die Anfertigung besonderer Eckteile für den Rahmen überflüssig.

Der Profilrahmen lässt sich dabei beispielsweise aus vier mit schrägen Enden versehenen Rahmenseiten zusammensetzen, die an den Ecken miteinander verschweisst werden. Besonders einfach wird die Herstellung des Profilrahmens jedoch, wenn der Profilrahmen aus einer in Umfangsrichtung durchlaufenden Leiste geformt ist, wobei der die Flansche aufnehmende Querschenkel an den Ecken auf Gehrung geschnitten und abgewinkelt ist, und wenn ferner die Gehrung mindestens zwischen den Flanschen verschlossen ist. Durch das Abwinkeln der durchlaufenden Leiste entsteht dabei am Zusammenstoss zweier Rahmenseiten in einer Ecke zwischen zwei Längsschenkeln des L-Profils keine scharfe, sondern eine abgerundete Kante, wodurch beispielsweise die Gefahr von Verletzungen des Montagepersonals vermindert wird.

Der Verschluss der Gehrung kann dabei durch Einsetzen eines Abdeckbleches erfolgen, das den in jeder Ecke zwischen den Enden der aus den Kanalwänden abgewinkelten Flansche verbleibenden Hohlraum füllt ; das Abdeckblech, das — je nach der Form des Hohlraumes — beispielsweise quadratisch, recht- oder dreieckig sein kann, wird dabei im stufenförmigen Absatz des Profilrahmens durch Punktschweissen gehalten. Es ist jedoch auch möglich, im Bereich des geschilderten Hohlraumes den stufenförmigen Absatz in den Querschenkeln des Profilrahmens wieder auszubeulen und die Trennlinie in der Gehrung anschliessend durch Stumpfschweissen zu verschliessen.

Während die Profilrahmen zweier Teilstücke bei relativ kurzen Seitenlängen — bis zu etwa 60 bis 80 cm — durch vier in den Ecken angeordnete Schraubenbolzen zusammengehalten werden können, ist es bei grösseren Seitenlängen vorteilhaft, zwischen den Schraubverbindungen in den Ecken zusätzlich entlang der Seiten Klemmschieber vorzusehen. Für deren Aufschieben und Halterung können in den Querschenkeln Führungs- und Haltenocken und in den Längsschenkeln des L-Profils Schlitze für den Einschub eines Klemmschiebers vorgesehen sein.

Eine andere einfache Möglichkeit für das Zusammenpressen der benachbarten Profilrahmen zweier Teilstücke besteht darin, dass die Teilstücke an jeder Ecke durch einen Klemmbügel zusammengespannt sind, der mit zwei gabelartig angeordneten Zungen in den Schlitzen des Längsschenkels zweier aneinanderliegender Profilrahmen eingreift und dessen Klemmbacken diese Längsschenkel der beiden Profilrahmen umfassen, wobei die Klemmbügel gleichzeitig Mittel für die Befestigung einer Aufhängevorrichtung, beispielsweise eine in einer Lasche vorgesehene Durchtrittsöffnung für einen Tragbolzen haben.

Im folgenden wird die Erfindung anhand eines Ausführungsbeispiels im Zusammenhang mit der Zeichnung näher erläutert.

Figur 1 zeigt einen Schnitt I-I von Fig. 2 durch mit Profilrahmen verstärkte benachbarte Enden zweier Teilstücke eines Luftkanals.

Figur 2 ist in Richtung der Achse eines Luftkanals eine Aufsicht auf das Ende eines Teilstückes.

Figur 3 gibt in grösserem Massstab die Aufsicht auf eine Ecke eines Teilstückes wieder, wobei die Sicht in Richtung des Pfeiles A von Fig. 1 erfolgt.

Figur 4 ist eine räumliche Skizze eines Klemmbügels, der gleichzeitig für das Zusammenpressen zweier benachbarter Profilrahmen und zur Aufhängung des Luftkanals benutzt werden kann.

Die Enden zweier miteinander zu verbindender Teilstücke 1 und 2 eines nicht weiter dargestellten Luftkanals sind entlang des Kanalumfanges um 90° zu Flanschen 3 abgebogen. Jeder Flansch 3 ist mit einer Seite eines Profilrahmens 4, z. B. durch nicht dargestellte Punktschweissungen fest verbunden. Der Profilrahmen 4 ist in Umfangsrichtung geschlossen und hat im Querschnitt L-förmiges Profil. Der längere quer zur Kanalwand verlaufende Querschenkel 5 des L besitzt für die Aufnahme der Flansche 3 einen stufenförmigen Absatz, der in Höhe und Tiefe an die Höhe und die Wandstärke der Flansche 3 angepasst ist. Der zweite in Richtung der Kanalachse angeordnete Längsschenkel ist mit 6 bezeichnet.

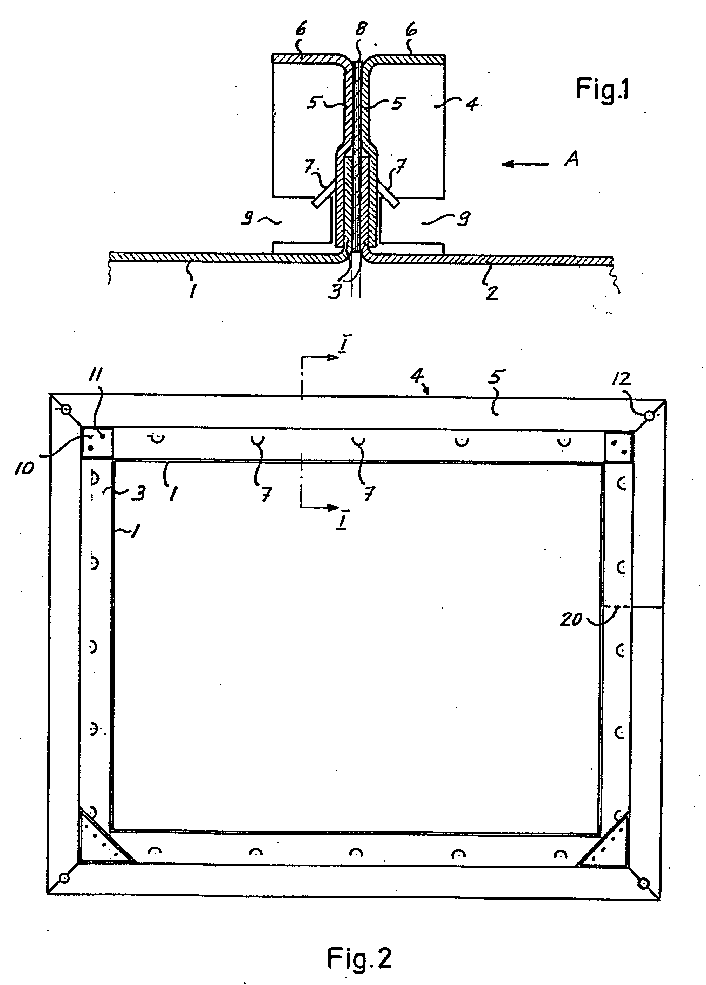

Beim Abbiegen der Flansche 3 aus der Ebene der Kanalwände entstehen in den Ecken — je nach der Führung der Schnitte, die dafür in den Blechen für die Kanalwände vorgenommen werden — quadratische (Fig. 2 oben) oder dreieckige (Fig. 2 unten) Hohlräume in den stufenförmigen Absätzen der Querschenkel 5. Der in diesen Hohlräumen freiliegende Gehrungsschnitt wird im Bereich der Flansche 3 durch Abdeckbleche 10 entsprechender Form abgedichtet, die zwischen die Flansche 3 zweier senkrecht zueinander verlaufender Kanalseiten eingelegt und durch Punktschweissungen 11 (Fig. 2) in den Querschenkeln 5 der Profilrahmen 4 befestigt werden.

Aus den Querschenkeln 5 sind im Bereich des stufenförmigen Absatzes nach rückwärts, d. h. von den Flanschen 3 weg, entlang des ganzen Umfangs verteilt halbkreisförmig Nocken 7 ausgebogen. Diese dienen zum Führen und Halten von nicht gezeigten Klemmschiebern, die bei grossen Seitenlängen des Luftkanals zum Zusammenpressen der beiden Profilrahmen 4 zweier Teilstücke 1, 2 benutzt werden. Teilstücke 1, 2 von Luftkanälen mit kurzen Seitenlängen werden durch nicht gezeigte Schraubenbolzen zusammengehalten, die durch Bohrungen 12 in den vier Ecken der Profilrahmen 4 gesteckt werden.

Zwischen den Flanschen 3 und in ihrer Verlängerung den Querschenkeln 5 ist die Verbindung zweier Teilstücke 1 und 2 durch ein Dichtelement 8 abgedichtet.

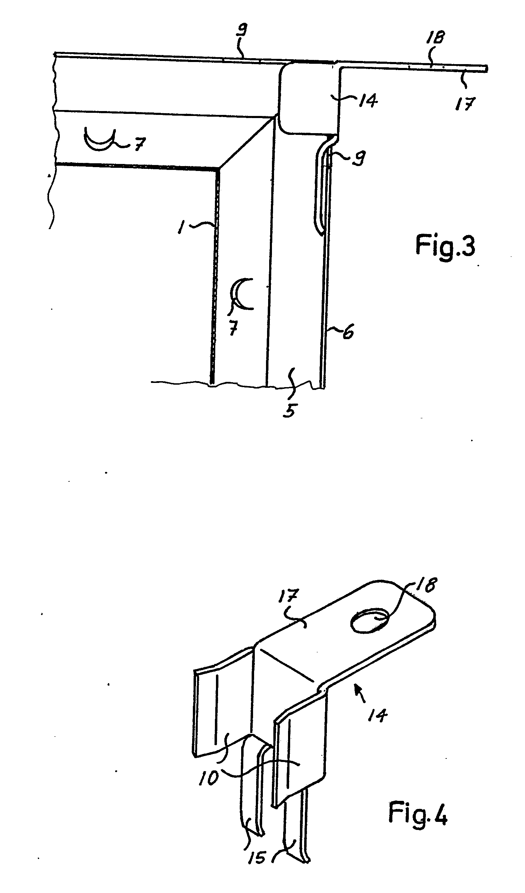

Für den Einschub der erwähnten Klemmschieber hat jeder Längsschenkel 6 des L-Profils in einem Abstand, der demjenigen der Nocken 7 vom Rand der ihnen zugehörigen Rahmenseite entspricht, einen Schlitz 9 (Fig. 3). In die Schlitze 9 zweier benachbarter Profilrahmen 4 können gleichzeitig gabelartige Zungen 15 (Fig. 4) eines Klemmbügels 14 eingreifen, der in Fig. 4 skizziert ist. Seine Klemmbacken 16 umgreifen die Längsschenkel 6 der benachbarten Profilrahmen 4 und pressen sie zusammen. Sie können somit bei der Montage der Teilstücke 1, 2 die durch die Bohrungen 12 gesteckten Schraubenbolzen ersetzen. Gegenüber den gabelartigen Zungen 15 um etwa 90° abgewinkelt weist der Klemmbügel 14 eine Lasche 17 auf, die eine Bohrung 18 für die Aufnahme einer Aufhängevorrichtung, beispielsweise für einen an einer Decke zu befestigenden Tragbolzen, hat.

Wie bereits erwähnt, wird der Profilrahmen 4 mit Vorteil aus einer Umfangsrichtung durchlaufenden Leiste mit nur einer Trennfuge 20 (Fig. 2) gefertigt, bei der die Querschenkel 5 des L-Profils auf Gehrung geschnitten und abgewinkelt werden, während die Längsschenkel 6 lediglich in Umfangsrichtung verformt werden, so dass durch sie an den Ecken abgerundete Kanten entstehen.

### Ansprüche

1. Verbindung für die Enden zweier Teilstücke (1, 2) eines eckigen Luftkanals für eine Lüftungsanlage, wobei entlang jeder Kanalseite die einander zugewandten Enden der Teilstücke (1, 2) mindestens nahezu senkrecht zu einem Flansch (3) abgewinkelt und unter Zwischenlegen einer elastischen Dichtung (8) zusammengepresst sind, und wobei die Flansche (3) jedes Teilstückes (1, 2) in einen Profilrahmen (4) mit in Umfangsrichtung geschlossenen, im Querschnitt L-förmigem Profil eingelassen und mit dem Profilrahmen (4) fest verbunden sind, dadurch gekennzeichnet, dass der quer zur Kanalseite verlaufende Querschenkel (5) des L-Profils über die Höhe des Flansches (3) einen stufenförmigen Absatz zur Aufnahme des Kanalflansches (3) hat, dass ferner dieser stufenförmige Absatz derart ausgebildet ist, dass die elastische Dichtung (8) in einer Ebene sowohl gegen den Flansch (3) als auch gegen den aussen liegenden Bereich des Querschenkels (5) anliegt, und dass schliesslich der in Richtung der Kanalachse angeordnete Längsschenkel (6) des L-Profils am Aussenumfang des Profilrahmens (4) angeordnet ist.

2. Verbindung nach Anspruch 1, dadurch gekennzeichnet, dass in dem Querschenkel (5) Führungs- und Haltenocken (7) und in dem Längsschenkel (6) des L-Profils Schlitze (9) für den Einschub eines Klemmschiebers vorgesehen sind.

3. Verbindung nach Anspruch 1, dadurch gekennzeichnet, dass der Profilrahmen (4) aus einer in Umfangsrichtung durchlaufenden Leiste geformt ist, wobei der die Flansche (3) aufnehmende Querschenkel (5) an den Ecken auf Gehrung geschnitten und abgewinkelt ist, und dass ferner die Gehrung mindestens zwischen den Flanschen (3) verschlossen ist.

4. Verbindung nach Anspruch 2, dadurch gekennzeichnet, dass zwei Teilstücke (1, 2) des Luftkanals an jeder Ecke durch einen Klemmbügel (14) zusammengepresst sind, der mit zwei gabelartig angeordneten Zungen (15) in den Schlitz (9) des Längsschenkels (6) zweier aneinander liegender Profilrahmen (4) eingreift, und dessen Klemmbacken (16) diese Längsschenkel (6) der beiden Profilrahmen (4) umfassen.

5. Verbindung nach Anspruch 4, dadurch gekennzeichnet, dass die Klemmbügel (14) Mittel (17, 18) für die Befestigung einer Aufhängevorrichtung haben.

### Claims

1. Connection for the ends of two parts (1, 2) of a rectangular air duct for a ventilation system, those ends of the parts (1, 2) which are near one another being bent along each side of the duct at least substantially perpendicularly to form a flange (3) and being pressed together with the interposition of a resilient seal (8), the flanges (3) of each part (1, 2) being introduced into an L-section frame (4) closed in the peripheral direction and being rigidly secured to the frame (4), characterised in that the L-section cross-arm (5) which extends transversely of the duct side has above the top of the flange (3) a step to receive the same, the step is such that the resilient seal (8) engages in one plane with the flange (3) and with the external region of the cross-arm (5), and the L-section longitudinal arm (6) disposed in the direction of the duct axis is disposed on the outer periphery of the frame (4).

2. A connection according to claim 1, characterised in that guiding and retaining projections (7) are provided in the cross-arm (5) and the longitudinal arm (6) is formed with slots (9) into which a clamping slider can be pushed.

3. A connection according to claim 1, characterised in that the frame (4) is shaped from a peripherally continuous strip, the cross-arm (5) which receives the flanges (3) being mitre-cut at the corners and bent, and the mitering is concealed at least between the flanges (3).

4. A connection according to claim 2, characterised in that two parts (1, 2) of the air duct are pressed together at each corner by a clamping stirrup or clip or the like (14) engaging by way of two fork-like tongues (15) in the slot (9) in the longitudinal arm (6) of two adjacent frames (4), the clamping jaws (6) of the member (14) engaging around these longitudinal arms (6) of the two frames (4).

5. A connection according to claim 4, characterised in that the clamping stirrup (14) has provision (17, 18) for the securing of a hanger device.

### Revendications

1. Connexion pour les extrémités de deux tronçons (1, 2) d'un canal d'air angulaire pour une installation d'aération, les extrémités tournées l'une vers l'autre des tronçons (1, 2) étant, le long de chaque côté de canal, pliées au moins approximativement de façon perpendiculaire pour former une bride (3) et étant comprimées ensemble avec intercalation d'un joint élastique (8), et les brides (3) de chaque tronçon (1, 2) étant disposées dans un cadre profilé (4) dont le profil en forme de L en section transversale est fermé dans le sens périphérique et étant reliées fixement à ce cadre profilé (4), connexion caractérisée en ce que la branche transversale (5) du profil en L s'étendant transversalement par rapport au côté du canal comporte, à la hauteur de la bride (3), un décrochement en gradin destiné à recevoir ladite bride de canal (3), en ce que de plus ce décrochement en gradin est réalisé de telle manière que le joint élastique (8) repose dans un plan aussi bien contre la bride (3) qu'également contre la zone, se trouvant à l'extérieur, de la branche transversale (5), et en ce que, finalement, la branche longitudinale (6) du profil en L disposée en direction de l'axe du canal se trouve sur la périphérie externe du châssis profilé (4).

2. Connexion selon la revendication 1, caractérisée en ce qu'on prévoit dans la branche transversale (5) des pattes de guidage et des pattes de maintien (7) et, dans la branche longitudinale (6) du profil en L, des fentes (9) pour l'introduction d'un coulisseau de serrage.

3. Connexion selon la revendication 1, caractérisée en ce que le châssis profilé (4) est formé d'une barrette qui se continue dans la direction périphérique, la branche transversale (5) recevant les brides (3) étant alors coupée en biais et pliée aux coins et en ce que de plus le biais est fermé au moins entre les brides (3).

4. Connexion selon la revendication 2, caractérisée en ce que deux tronçons (1, 2) du canal d'air sont comprimés ensemble sur chaque coin par un étrier de serrage (14) qui s'engage avec deux languettes (15) disposées en fourche dans la fente (9) de la branche longitudinale (6) de deux châssis profilés (4) se trouvant l'un à côté de l'autre et dont les mâchoires de serrage (16) entourent ces branches longitudinales (6) des deux châssis profilés (4).

5. Connexion selon la revendication 4, caractérisée en ce que les étriers de serrage (14) ont des moyens (17, 18) permettant la fixation d'un dispositif de suspension.

Fig.1

Fig.2

Fig.3

Fig.4